# EUROPEAN PATENT APPLICATION

(11) **EP 4 567 654 A1**
(43) Date of publication of application: **11.06.2025**
(21) Application number: 24217900.0
(22) Date of filing: 05.12.2024
(51) Int. Cl.: G06F 30/20, G06F 30/28

(54) **METHOD FOR DESIGNING A COOLING SYSTEM FOR EQUIPMENT RACKS**

(30) Priority: 08.12.2023 US 202363607641 P; 03.12.2024 US 202418966515
(71) Applicant: Schneider Electric IT Corporation, Foxboro, MA 02035 (US)
(72) Inventor: CONDOR, Michael B., 01810 Andover (US); VANGILDER, James William, 01810 Andover (US)
(74) Representative: Plasseraud IP

(57) **Abstract**

A method for designing a cooling system for equipment racks comprising receiving information regarding a layout of IT racks of information technology equipment within a data center; receiving data regarding measured temperatures at inlets of the IT racks; displaying representations of the measured temperatures at the inlets of the IT racks in a three dimensional model of the data center, along with temperatures at the inlets of the IT racks predicted from a computation fluid dynamics analysis of the data center; and arranging or locating a cooling system for the IT racks and/or adjusting operating parameters of the cooling system to obtain a desired temperature of the information technology equipment, by comparing the measured temperatures and the predicted temperatures to identify discrepancies between such temperatures and by calibrating a CFD model of the data center used to perform the computation fluid dynamics analysis to reduce the magnitude of these discrepancies.

## Description

### BACKGROUND

### Field of the Disclosure

At least one example in accordance with the present disclosure relates generally to systems and methods for displaying measured values of parameters including one or more of temperature, humidity, or airflow on or through equipment in a three dimensional model of an information technology room. The measured parameters may be compared to values of these parameters predicted by a computational fluid dynamics analysis of the information technology room. Discrepancies between the measured and predicted values of the parameters may be flagged. Discrepancies between the measured and predicted values of the parameters may be used to guide calibration of the computational fluid dynamics model of the information technology room.

### Discussion of Related Art

Centralized information technology (IT) rooms or data centers for computer, communications, and other electronic equipment contain numerous equipment racks of equipment that require power, cooling, and connections to external communications facilities. Electronic equipment contained in the equipment racks generate substantial heat and accordingly typical equipment racks use air flow through the racks to cool the electronic equipment. In the design or optimization of the arrangement of equipment in an IT room, computational fluid dynamics analysis may be utilized to determine the air temperatures, pressures, and velocities and related physical parameters throughout the IT room for a given proposed arrangement of equipment. Different possible equipment arrangements may be analyzed utilizing computational fluid dynamics to determine an equipment arrangement that results in optimized airflows and temperatures throughout the IT room.

### SUMMARY

In accordance with one aspect, there is provided a method for designing a cooling system for equipment racks as defined in the appended claims.

In accordance with other aspects, there are provided a computer processing system, a non-transitory computer readable media and a computer program.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a block diagram of one example of a computer system with which various aspects in accord with the present invention may be implemented;
FIG. 2 is a schematic of one example of a distributed system including an IT room management system;
FIG. 3 illustrates a three dimensional (3D) model of a data center including representations of measured temperatures at the inlets of the IT racks according to one example of the present invention;
FIG. 4 is a top-down view of the model of the data center of FIG. 3 in which a representation of the maximum measured temperature at any inlet of each respective IT rack is displayed on the representation of that rack;
FIG. 5 is a 3D model of the data center of FIG. 3 including representations of measured temperatures at the inlets of the IT racks as well as a plane including representations of temperatures within the data center predicted from a computational fluid dynamics (CFD) simulation of the data center;
FIG. 6 is a top-down view of the model of the data center of FIG. 3 in which representations of measured airflows through perforated floor tiles in the data center are presented on floor tiles whose airflows were measured, as well as representations of the airflows through the perforated floor tiles predicted from a CFD simulation of the data center;
FIG. 7 illustrates an interface for a user to enter parameters for use in performing a comparison between measured parameters in a data center and values of those parameters predicted by a CFD simulation of the data center according to one example of the present invention;
FIG. 8 is a 3D model of the data center of FIG. 3 including representations of differences between measured temperatures at the inlets of the IT racks and temperatures at the inlets of the IT racks predicted by a CFD simulation of the data center;
FIG. 9 is a top-down view of the model of the data center of FIG. 3 in which representations of differences between measured airflows through perforated floor tiles in the data center and airflows predicted from a CFD simulation of the data center are presented on floor tiles whose airflows were measured;
FIG. 10 is a top-down view of the model of the data center of FIG. 3 in which a representation of the difference between the maximum measured temperature at any inlet of each respective IT rack and the maximum rack inlet temperature predicted by a CFD model of the data center is displayed on the representation of that rack; and
FIG 11 is a report of average differences between measured parameters in a data center and values of those parameters predicted by a CFD simulation of the data center according to one example of the present invention.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

IT rooms or data centers, the terms being used synonymously herein, may contain one or more types of IT equipment that may manipulate, receive, store, and/or transmit multiple forms of data including, for example, voice or video data. The IT equipment can be housed in IT racks. Instead or in addition, equipment such as power supplies, user interfaces, etc., may be mounted in IT racks in IT rooms. IT rooms may include cooling equipment for the IT equipment. The cooling equipment may be mounted in racks along with the IT equipment or provided as one or more separate units, sometimes referred to as coolers or computer room air conditioner (CRAC) or other forms of cooling units.

Systems and methods provided herein provide for airflows through equipment racks in an IT room and throughout the IT room and associated air temperatures and pressures to be modelled on a computer. The systems may include graphical user interfaces including displays configured to illustrate the modelled air temperatures, pressures, and velocities in the IT room, for example, as predicted by CFD analysis. As a result of the model and generated display, airflow systems for equipment racks can be designed and implemented in existing IT rooms and/or during the design of new IT rooms and/or equipment within the IT room, for example, IT racks, equipment with IT racks, and cooling systems may be relocated or rearranged and/or have operating parameters adjusted to obtain desired temperatures of the IT equipment.

Various computing devices may execute various operations discussed above. Using data stored in associated memory, in one example, a computer executes one or more instructions stored on one or more non-transitory computer-readable media that may result in manipulated data. In some examples, the computer may include one or more processors or other types of computing hardware. In one example, the computing hardware is or includes a commercially available, general-purpose processor. In another example, the computer performs at least a portion of the operations discussed herein using an application-specific integrated circuit (ASIC) tailored to perform particular operations in addition to, or in lieu of, a general-purpose processor. As illustrated by these examples, examples in accordance with the present invention may perform the operations described herein using many specific combinations of hardware and software and the invention is not limited to any particular combination of hardware and software components.

In various examples, a computer may implement a multi-threading process to execute operations discussed herein. For example, while a first thread of the computer may perform operations including determining airflows in an equipment rack, a second thread of the computer may calculate one or more variables associated with an airflow model. In at least one embodiment, a computer contained within an IT room management system is configured to model airflow in equipment racks using methods described herein. Further, in at least one example, the IT room management system may monitor and control airflows in IT room equipment racks based on results generated by the system. Based on model results or based on actual measured parameters, IT room cooling systems, including cooling components contained in equipment racks, may be controlled by the IT room management system to improve overall cooling in an IT room.

Aspects disclosed herein in accordance with the present embodiments, are not limited in their application to the details of construction and the arrangement of components set forth in the following description or illustrated in the drawings. These aspects are capable of assuming other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiments.

For example, according to one embodiment of the present invention, a computer system is configured to perform any of the functions described herein, including but not limited to, configuring, modeling, and presenting information regarding specific IT room configurations. The computer system may present the information to a user as a display of one or more of airflow, temperatures, and related physical parameters or metrics (e.g., pressures, perforated-tile airflow rates, capture indices, etc.) in a portion or throughout an IT room in a graphical user interface. Further, computer systems in embodiments may receive input from a user and/or directly from physical sensors in the data center that automatically measure environmental parameters in an IT room. The computer system may control equipment, such as chillers or coolers to optimize performance. Moreover, the systems described herein may be configured to include or exclude any of the functions discussed herein. Thus, the embodiments are not limited to a specific function or set of functions. Also, the phraseology and terminology used herein is for the purpose of description and should not be regarded as limiting.

### Computer System

Various aspects and functions described herein in accordance with the present embodiments may be implemented as hardware or software on one or more computer systems. There are many examples of computer systems currently in use. These examples include, among others, network appliances, personal computers, workstations, mainframes, networked clients, servers, media servers, application servers, database servers, and web servers. Other examples of computer systems may include mobile computing devices, such as cellular phones and personal digital assistants, and network equipment, such as load balancers, routers and switches. Further, aspects in accordance with the present embodiments may be located on a single computer system or may be distributed among a plurality of computer systems connected to one or more communications networks.

For example, various aspects and functions may be distributed among one or more computer systems configured to provide a service to one or more client computers, or to perform an overall task as part of a distributed system. Additionally, aspects may be performed on a client-server or multi-tier system that includes components distributed among one or more server systems that perform various functions. Thus, the embodiments are not limited to executing on any particular system or group of systems. Further, aspects may be implemented in software, hardware or firmware, or any combination thereof. Thus, aspects in accordance with the present embodiments may be implemented within methods, acts, systems, system elements and components using a variety of hardware and software configurations, and the embodiments are not limited to any particular distributed architecture, network, or communication protocol.

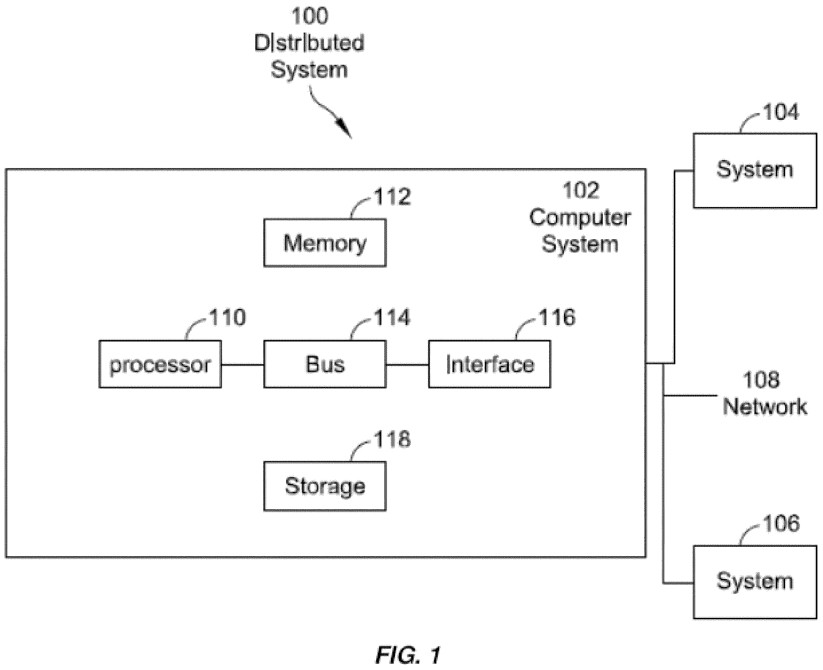

FIG. 1 shows a block diagram of a distributed computer system 100, in which various aspects and functions in accord with the present embodiments may be practiced. Distributed computer system 100 may include one more computer systems. For example, as illustrated, distributed computer system 100 includes computer systems 102, 104, and 106. As shown, computer systems 102, 104, and 106 are interconnected by, and may exchange data through, communication network 108. Network 108 may include any communication network through which computer systems may exchange data. To exchange data using network 108, computer systems 102, 104, and 106 and network 108 may use various methods, protocols and standards, including, among others, token ring, Ethernet, wireless Ethernet, Bluetooth, TCP/IP, UDP, Http, FTP, SNMP, SMS, MMS, SS7, Json, Soap, and Cobra. To ensure data transfer is secure, computer systems 102, 104, and 106 may transmit data via network 108 using a variety of security measures including TLS, SSL, or VPN among other security techniques. While distributed computer system 100 illustrates three networked computer systems, distributed computer system 100 may include any number of computer systems and computing devices, networked using any medium and communication protocol.

Various aspects and functions in accordance with the present embodiments may be implemented as specialized hardware or software executing in one or more computer systems including computer system 102 shown in FIG. 1. As depicted, computer system 102 includes processor 110, memory 112, bus 114, interface 116, and storage 118. Processor 110 may perform a series of instructions that result in manipulated data. Processor 110 may be a commercially available processor such as an Intel Core^{®}, Motorola PowerPC, SGI MIPS, Sun UltraSPARC, or Hewlett-Packard PA-RISC processor, but may be any type of processor, multi-processor, microprocessor, or controller as many other processors and controllers are available. Processor 110 is connected to other system elements, including one or more memory devices 112, by bus 114.

Memory 112 may be used for storing programs and data during operation of computer system 102. Thus, memory 112 may be a relatively high performance, volatile, random access memory such as a dynamic random access memory (DRAM) or static memory (SRAM). However, memory 112 may include any device for storing data, such as a disk drive or other non-volatile, non-transitory, storage device. Various embodiments in accordance with the present invention may organize memory 112 into particularized and, in some cases, unique structures to perform the aspects and functions disclosed herein.

Components of computer system 102 may be coupled by an interconnection element such as bus 114. Bus 114 may include one or more physical busses, for example, busses between components that are integrated within a same machine, but may include any communication coupling between system elements including specialized or standard computing bus technologies such as IDE, SCSI, PCI, and InfiniBand. Thus, bus 114 enables communications, for example, data and instructions, to be exchanged between system components of computer system 102.

Computer system 102 also includes one or more interface devices 116 such as input devices, output devices, and combination input/output devices. Interface devices may receive input or provide output. More particularly, output devices may render information for external presentation. The interface devices 116 may include, for example, one or more graphical user interfaces that may be disposed proximate to or separate from other components of the computer system 102. A graphical user interface of the computer system 102 may, for example, be displayed through a web browser that accesses information from the memory 112. Input devices may accept information from external sources. Examples of interface devices include keyboards, mouse devices, trackballs, microphones, touch screens, printing devices, display screens, speakers, network interface cards, etc. Interface devices allow computer system 102 to exchange information and communicate with external entities, such as users and other systems. Other examples of input devices include temperature, humidity, and/or airflow sensors that may be positioned on or within IT equipment racks, perforated floor tiles, or other equipment or surfaces in an IT room. In one non-limiting example, a temperature/humidity sensor that could be mounted on an IT rack is the model AP9335TH temperature and humidity sensor available from Schneider Electric. In another non-limiting example, a balometer capture hood that may be used to measure airflow from a perforated floor tile is the model EBT73 1 balometer capture hood available from TSI Incorporated.

Storage system 118 may include a computer readable and writeable, nonvolatile, non-transitory, storage medium in which instructions are stored that define a program to be executed by the processor. The program to be executed by the processor may cause the processor 100 or computer system 102 to perform any one or more embodiments of the methods disclosed herein. Storage system 118 also may include information that is recorded, on or in, the medium, and this information may be processed by the program. More specifically, the information may be stored in one or more data structures specifically configured to conserve storage space or increase data exchange performance. The instructions may be persistently stored as encoded signals, and the instructions may cause a processor to perform any of the functions described herein. The medium may, for example, be an optical disk, magnetic disk, or flash memory, among others. In operation, the processor or some other controller may cause data to be read from the nonvolatile recording medium into another memory, such as memory 112, that allows for faster access to the information by the processor than does the storage medium included in storage system 118. The memory may be located in storage system 118 or in memory 112, however, processor 110 may manipulate the data within the memory 112, and then may copy the data to the medium associated with storage system 118 after processing is completed. A variety of components may manage data movement between the medium and integrated circuit memory element and the presently described embodiments are not limited thereto. Further, the embodiments are not limited to a particular memory system or data storage system. Portions of the memory 112 or storage system 118 may be included in the same computer system as other components of the computer system 102 or may be resident in a cloud-based system that is accessible via the internet or other communications system or protocol.

Although computer system 102 is shown by way of example as one type of computer system upon which various aspects and functions in accordance with the present embodiments may be practiced, any aspects of the presently disclosed embodiments are not limited to being implemented on the computer system as shown in FIG. 1. Various aspects and functions in accordance with the presently disclosed embodiments may be practiced on one or more computers having a different architectures or components than that shown in FIG. 1. For instance, computer system 102 may include specially-programmed, special-purpose hardware, for example, an application-specific integrated circuit (ASIC) tailored to perform a particular operation disclosed herein. Another embodiment may perform the same function using several general-purpose computing devices running MAC OS System X with Motorola PowerPC processors and several specialized computing devices running proprietary hardware and operating systems.

Computer system 102 may be a computer system including an operating system that manages at least a portion of the hardware elements included in computer system 102. Usually, a processor or controller, such as processor 110, executes an operating system which may be, for example, a Windows-based operating system such as Windows 11 or Windows 10 operating systems, available from the Microsoft Corporation, a MAC OS System X operating system available from Apple Computer, one of many Linux-based operating system distributions, for example, the Enterprise Linux operating system available from Red Hat Inc., a Solaris operating system available from Sun Microsystems, or a UNIX operating system available from various sources. Many other operating systems may be used, and embodiments are not limited to any particular implementation.

The processor and operating system together define a computer platform for which application programs in high-level programming languages may be written. These component applications may be executable, intermediate, for example, C-, bytecode or interpreted code which communicates over a communication network, for example, the Internet, using a communication protocol, for example, TCP/IP. Similarly, aspects in accord with the presently disclosed embodiments may be implemented using an object-oriented programming language, such as .Net, SmallTalk, Java, C++, Ada, or C# (C-Sharp). Other object-oriented programming languages may also be used. Alternatively, functional, scripting, or logical programming languages may be used.

Additionally, various aspects and functions in accordance with the presently disclosed embodiments may be implemented in a non-programmed environment, for example, documents created in HTML, XML, or other format that, when viewed in a window of a browser program, render aspects of a graphical-user interface or perform other functions. Further, various embodiments in accord with the present invention may be implemented as programmed or non-programmed elements, or any combination thereof. For example, a web page may be implemented using HTML while a data object called from within the web page may be written in C++. Thus, the presently disclosed embodiments are not limited to a specific programming language and any suitable programming language could also be used.

A computer system included within an embodiment may perform additional functions outside the scope of the presently disclosed embodiments. For instance, aspects of the system may be implemented using an existing commercial product, such as, for example, Database Management Systems such as SQL Server available from Microsoft of Seattle WA., Oracle Database from Oracle of Redwood Shores, CA, and MySQL from MySQL AB, a subsidiary of Oracle or integration software such as Web Sphere middleware from IBM of Armonk, NY. However, a computer system running, for example, SQL Server may be able to support both aspects in accord with the presently disclosed embodiments and databases for sundry applications.

### Example System Architecture

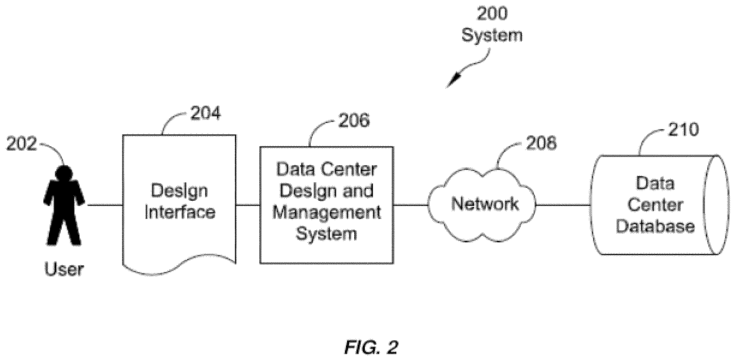

FIG. 2 presents a context diagram including physical and logical elements of distributed system 200. As shown, distributed system 200 is specially configured in accordance with the presently disclosed embodiments. The system structure and content recited with regard to FIG. 2 is for exemplary purposes only and is not intended to limit the embodiments to the specific structure shown in FIG. 2. As will be apparent to one of ordinary skill in the art, many variant system structures can be architected without deviating from the scope of the presently disclosed embodiments. The particular arrangement presented in FIG. 2 was chosen to promote clarity.

Information may flow between the elements, components, and subsystems depicted in FIG. 2 using any technique. Such techniques include, for example, passing the information over the network via TCP/IP, passing the information between modules in memory and passing the information by writing to a file, database, or some other non-volatile storage device. Other techniques and protocols may be used without departing from the scope of the presently disclosed embodiments.

Referring to FIG. 2, system 200 includes user 202, interface 204, IT room design and management system 206, communications network 208, and IT room database 210. System 200 may allow user 202, such as an IT room architect or other IT room personnel, to interact with interface 204 to create or modify a model of one or more IT room configurations. System 200 may allow user 202 to interact with interface 204 to view a graphical display of results of embodiments of models disclosed herein. According to one embodiment, interface 204 may include aspects of the floor editor and the rack editor as disclosed in Patent Cooperation Treaty Application No. PCT/US08/63675, titled "Methods and Systems for Managing Facility Power and Cooling," filed on May 15, 2008, which is incorporated herein by reference in its entirety and is hereinafter referred to as PCT/US08/63675. In other embodiments, interface 204 may be implemented with specialized facilities that enable user 202 to design, in a drag and drop fashion, a model that includes a representation of the physical layout of an IT room or any subset thereof. This layout may include representations of IT room structural components as well as IT room equipment. The features of interface 204, as may be found in various embodiments in accordance with the present invention, are discussed further below. In at least one embodiment, information regarding an IT room is entered into system 200 through the interface via manual data entry and/or by accessing data from one or more sensors present in an IT room, and assessments and recommendations for the IT room are provided to the user. Further, in at least one embodiment, optimization processes may be performed to optimize cooling performance and energy usage of the IT room. Optimization processes may be based on simulated values of one or more parameters in an IT room, values of one or more measured parameters in an IT room, or a combination of both.

As shown in FIG. 2, IT room design and management system 206 presents data design interface 204 to user 202. According to one embodiment, IT room design and management system 206 may include aspects of the IT room design and management system as disclosed in PCT/US08/63675. In this embodiment, design interface 204 may incorporate functionality of the input module, the display module and the builder module included in PCT/US08/63675 and may use the database module to store and retrieve data.

As illustrated, IT room design and management system 206 may exchange information with IT room database 210 via network 208. This information may include any information needed to support the features and functions of IT room design and management system 206. For example, in one embodiment, IT room database 210 may include at least some portion of the data stored in an IT room equipment database such as described in PCT/US08/63675. In another embodiment, this information may include any information needed to support interface 204, such as, among other data, the physical layout of one or more IT room model configurations, the production and distribution characteristics of the cooling providers included in the model configurations, the consumption characteristics of the cooling consumers in the model configurations, and a listing of equipment racks and cooling providers to be included in a cluster.

In one embodiment, IT room database 210 may store types of cooling providers, the amount of cool air provided by each type of cooling provider, and a temperature of cool air provided by the cooling provider. Thus, for example, IT room database 210 includes records of a particular type of computer room air conditioning (CRAC) unit that is rated to deliver airflow at the rate of 5,600 cubic feet per minute (cfm) at a temperature of 68 degrees Fahrenheit. In addition, the IT room database 210 may store one or more measured or simulated cooling metrics, such as inlet and outlet temperatures of the CRACs and inlet and exhaust temperatures of one or more equipment racks. The temperatures may be periodically measured and input into the system, or in other embodiments, the temperatures may be continuously monitored using devices coupled to the system 200.

IT room database 210 may take the form of any logical construction capable of storing information on a computer readable medium including, among other structures, flat files, indexed files, hierarchical databases, relational databases or object oriented databases. The data may be modeled using unique and foreign key relationships and indexes. The unique and foreign key relationships and indexes may be established between the various fields and tables to ensure both data integrity and data interchange performance.

The computer systems shown in FIG. 2, which include IT room design and management system 206, network 208 and IT room equipment database 210, each may include one or more computer systems. As discussed above with regard to FIG. 1, computer systems may have one or more processors or controllers, memory, and interface devices. The particular configuration of system 200 depicted in FIG. 2 is used for illustration purposes only and embodiments of the invention may be practiced in other contexts. Thus, embodiments of the invention are not limited to a specific number of users or systems.

Aspects and embodiments disclosed herein include methods of performing computational fluid dynamics (CFD) analyses used to determine environmental parameters within a proposed or existing IT room, for example, air temperatures, pressures, and velocities throughout the IT room, in overhead or under-floor plenums of the IT room, and/or within equipment in the IT room, for example, within racks in the IT room. These methods may be performed on embodiments of the computer systems disclosed herein and may be represented by code recorded on non-volatile computer readable medium that may be read by embodiments of the computer systems disclosed herein. In some embodiments, comparisons of actual measured values of one or more parameters such as temperature, humidity, airflow, etc. at one or more locations in an existing IT room may be compared to the values of these parameters predicted by a CFD analysis of the IT room. Discrepancies between measured and predicted values of the parameters may be illustrated in a GUI of a computer system as disclosed herein and may be utilized to calibrate the CFD model of the IT room used to perform the CFD analysis to reduce the magnitude of these discrepancies.

Engineers and others involved in the design of data centers build 3D models of the data center whitespace (the arrangement of equipment in the data center) to run CFD simulations. The CFD simulation is used to better understand the airflow that ensures the IT equipment running in the data center will be sufficiently and efficiently cooled.

As known in the art, CFD analysis typically involves overlaying a computational grid on a computational representation of a space to be analyzed and breaking the model of the space into a number of volumetric units (or two-dimensional units for two-dimensional CFD analysis) referred to as grid cells. The CFD model is assigned an initial state, for example, with the temperature and pressure of all grid cells within the model set at ambient temperature and pressure with no initial air flow between cells. The analysis then proceeds to determine the air and heat flows consistent with the governing laws of conservation of mass, momentum, and energy applied to all grid cells. The solution process terminates when all conservation equations have been adequately satisfied and the simulation reaches a steady-state or has covered a physical time period as indicated by the user.

This brief description of CFD analysis is provided for background and is highly simplified. Those of skill in the art would be aware of additional complexities and factors that would be included in a CFD analysis for different implementations.

During the operation of data center, measurements are often taken of one or more IT rack inlet temperature and humidity values at the same time (or within a short time window). The measurements may be taken manually, from a person or team of people going from rack to rack and recording values (such as during a data center audit.) Measurements may also be taken from temperature and humidity sensors disposed on or within IT racks, floor tiles, or other equipment or surfaces in the data center that are part of the normal operation of the data center using Data Center Infrastructure Management (DCIM) software (such as IT Expert/IT Advisor). This collection of measurements can then be used to visualize operational IT rack "hotspots" in the context of a 3D model of the data center. The visualization of the measured parameters may be illustrated in the same 3D data center whitespace model used to as the basis for a CFD simulation of the data center.

Using a 3D data center whitespace model that includes measured IT rack inlet temperature and/or humidity values, the user can visualize measured data (temperature or humidity) at a surface of an IT rack, for example, on the front of the IT rack, accurately reflecting value and position of the discrete measurement points. The user may be able to access a top-down view of the model of the data center in the GUI of a computer system as disclosed herein. Coloring or another form of patterning of an IT rack in the top-down view may reflect the maximum measured value of a parameter such as temperature and/or humidity for that rack, easily identifying across the data center, which IT racks have "hotspots" / the highest values.

Data center operators, using DCIM software, will monitor certain real-time values such as IT rack power, cooler supply airflow and cooler supply airflow temperature of their data center. These real-time values can then be used, along with the 3D data center whitespace model as inputs for the data center CFD simulation. Using a non-calibrated CFD model for DCIM applications will give the user an idea of what to expect with changes to their data center, but they can't be confident that the results of the simulation will reflect what will happen in real life. If user can take measurements and prove that they match the simulated CFD results, then they can confidently use the CFD simulation to explore future configuration changes and what-if style scenarios.

By presenting both visualizations of measured parameters, for example, IT rack input temperature (or visualizations of other measured parameters) and the visualization of predicted values of these parameters obtained from a CFD simulation of a data center at the same time in the 3D data center whitespace model, the user can then manually calibrate/refine the 3D model for CFD simulations, with the goal of adjusting the 3D model such that simulated data will match measured data. Comparisons between the measured parameters and values of those measured parameters that were predicted from a CFD analysis of the data center may provide for one to manually calibrate (refine) a 3D data center whitespace CFD model such that simulated results from a data center CFD analysis match (or at least more closely conform to) measured results. When calibration step is complete, the 3D data center whitespace model can be considered a calibrated data center CFD model. A calibrated data center CFD model provides the confidence to use it as a data center whitespace cooling digital twin (e.g., to predict future configurations such as IT population changes and to perform what-if style scenarios.)

In some embodiments, calibration of the data center CFD model may include going back into the data center and closely examining any assumptions one may have made when modeling the data center and adjusting the data center CFD model to account for discrepancies between previously made assumptions and actual configuration and operation of the data center. In one example, if one had assumed that an IT rack had a full population of IT servers, when in reality, the IT rack is only partially populated one could adjust the IT population for that IT rack and the power (and subsequent airflow) used by the rack in the 3D CFD model. In another example, one could add additional details left out of the initial modeling, such as cable trays or other smaller, geometric detail that could affect airflow.

Due to the dual use of the 3D data center whitespace model and the shared domain of data center whitespace cooling, visualizations of simulated and measured data based on the 3D data center whitespace model can often be confused. Currently, existing Schneider-Electric software tools such as IT Advisor/Data Center Operations, Advantage Max 2, or Energy Suite, use extrapolation techniques to present discrete, measured values as continuous. This can be misleading since the measured values are not continuous. There is little basis to claim that discrete, measured values can meaningfully visualize values as if they were continuous.

Visualizing the different values (measured vs. simulated) in different formats helps clarify and distinguish between discrete, measured values and continuous, simulated values. It reduces confusion and allows for both types of data to be visualized and worked with together in the same 3D data center whitespace model. Discrete, measured values may be displayed in the 3D data center whitespace as, for example, individual points on the front of the IT rack or on a floor tile, accurately reflecting value and position of the discrete measurement points.

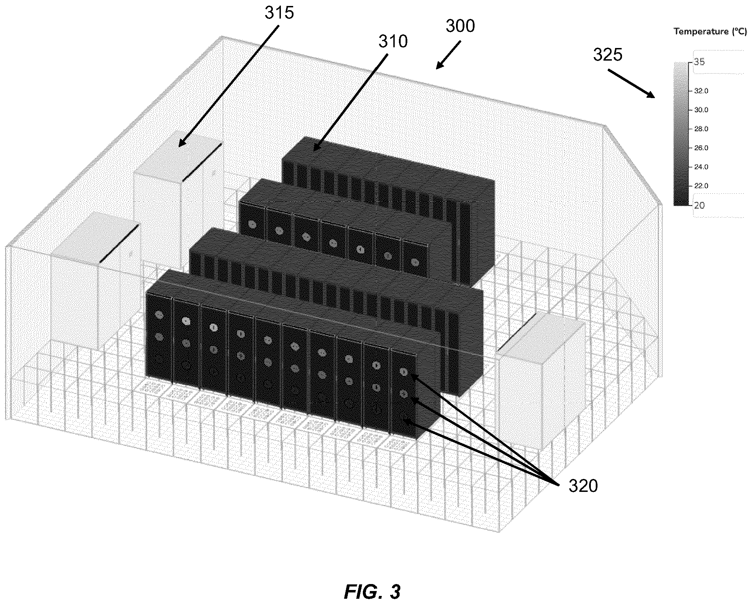

FIG. 3 illustrates one view of a 3D model of a data center 300 that may be presented to a user in a GUI of a computer system as disclosed herein. The data center 300 includes multiple rows of IT racks 310 and multiple CRAC units 315. Utilizing a computer program as disclosed herein, for example, a version of IT Advisor CFD from Schneider-Electric and associated hardware, after constructing the 3D data center whitespace model, the user may enter measured temperature and/or humidity values and the positions relative to the front of the IT rack 310 the measurements were taken on a rack-by-rack basis. The user can then choose to visualize the measured values (temperature or humidity) as displayed on the front of the racks as representations such as circles 320, at the actual position of the measurements that were made. Each of the respective circles 320 may be colored with different colors reflecting the value of the measurement represented by the respective circle 320. An image of a scale 325 may be provided to indicate what colors correspond to what values of a temperature or humidity measurement. The circles 320 may additionally or alternatively be patterned with different line or dot patterns, for example, with pattern density being indicative of different values of the measured parameters. The circles 320 in FIG. 3 are shown in greyscale to represent different values of the measured parameter, that in FIG. 3 is temperature, although the measured parameter could alternatively be humidity. This is, however, due to the requirement that figures in patents be shown in greyscale and it is to be understood that the different greyscale values may be representative of different coloring of the circles 320 that is, in turn, indicative of different values of the measured parameter. It is also to be understood that although the measured values are shown using representations in the form of circles 320, other shapes, for example, stars, squares, or any other geometric figure may be utilized for the parameter representations.

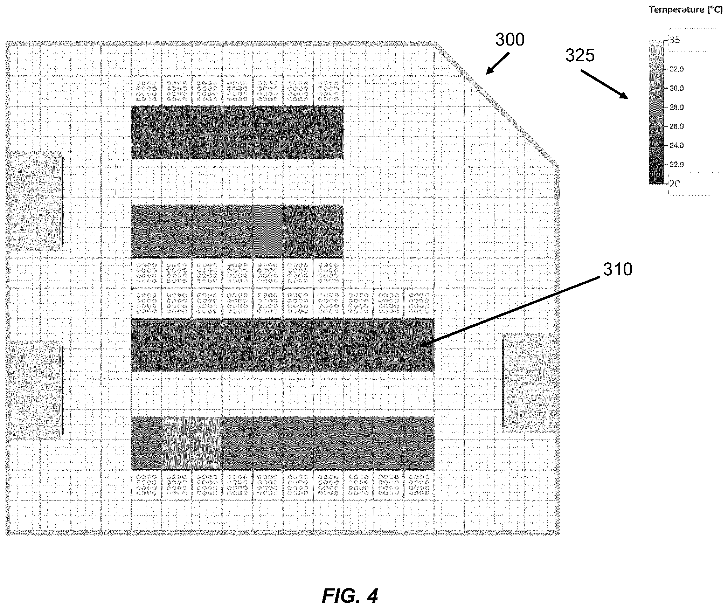

One may rotate the 3D image of the data center in the GUI to obtain a top-down view as illustrated in FIG. 4. The top-down view provides for the user to visualize the maximum measured IT rack inlet temperature (or humidity) for each rack 310. The entire color of a rack 310 will reflect the maximum measured IT rack inlet temperature for that rack. Coloring the racks in this way provide an "at-a-glance" view that allows a user to quickly pick out racks that deviate from expected values (e.g., hot spots). The racks 310 in FIG. 4 are shown in greyscale to represent different values of the measured parameter, that in FIG. 4 is temperature, although the measured parameter could alternatively be humidity. This is, as discussed above with respect to FIG. 3, due to the requirement that figures in patents be shown in greyscale and it is to be understood that the different greyscale values may be representative of different coloring of the racks 310 that is, in turn, indicative of different maximum values of the measured parameter in each of the racks 310.

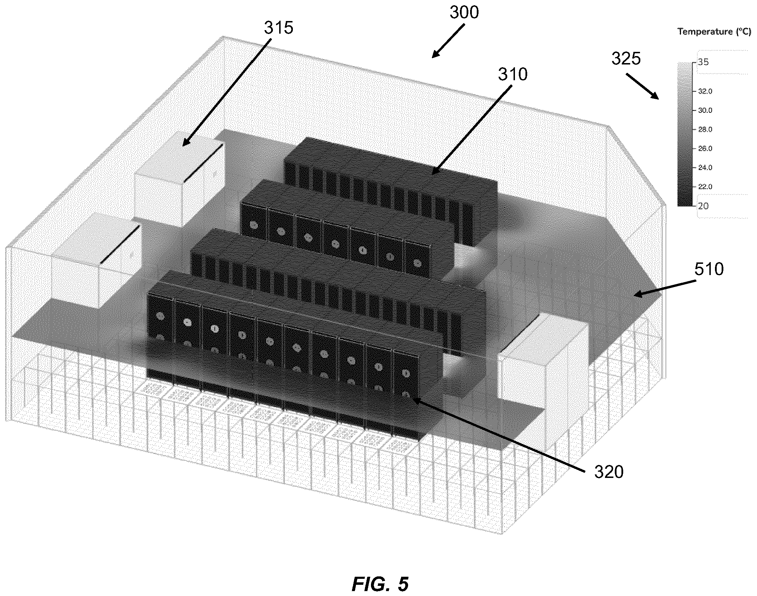

The user can run a CFD simulation based on the same 3D data center whitespace model used for display of the measured parameter values. After the CFD simulation has completed, the user can choose to visualize the simulated data as well as the measured values at the same time. FIG. 5 illustrates a "slice" of predicted temperatures 510 from a CFD simulation overlaid on a 3D display such as shown in FIG. 3 including representations of measured temperatures on the IT racks 310. Visualizing both sets of values at the same time allows the user to compare the simulated values to the measured values. In some embodiments a user may select the height of the "slice" of predicted temperatures 510 within the data center to align with different representations of the measured parameter (e.g., temperature) values.

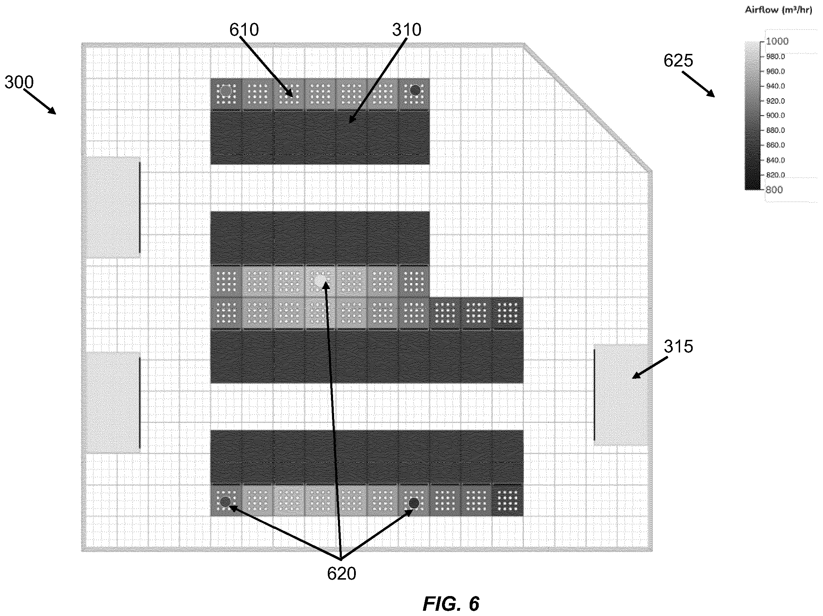

In another embodiment, a user may utilize the tool disclosed herein to display and compare both measured airflows and the results of a CFD simulation of airflow through perforated floor tiles in a data center including perforated floor tiles. FIG. 6 illustrates one example of this in which the user views the data center 300 in a top-down view similar to FIG. 4. Instead of providing representations of the maximum inlet temperatures of the racks 310 as in FIG. 4, however, the view of FIG. 6 illustrates simulated and measured airflows through perforated floor tiles 610. Locations of measured floor tile airflows are shown as representations, for example, in the form of circles 620 at the points on the floor tiles 610 at which the airflow measurements were taken. Each of the respective circles 620 may be colored with different colors reflecting the value of the airflow measurement represented by the respective circle 620. An image of a scale 625 may be provided to indicate what colors correspond to what values of an airflow measurement. The circles 620 may additionally or alternatively be patterned with different line or dot patterns, for example, with pattern density being indicative of different values of the measured airflows. The circles 620 in FIG. 6 are shown in greyscale to represent different values of the measured airflows. This is, as discussed above with respect to FIG. 3, due to the requirement that figures in patents be shown in greyscale and it is to be understood that the different greyscale values may be representative of different coloring of the circles 620 that is, in turn, indicative of different airflows through the floor tiles 605 on which the representations are provided. It is also to be understood that although the measured airflow values are shown using representations in the form of circles 620, other shapes, for example, stars, squares, or any other geometric figure may be utilized for the airflow representations.

Along with the representations 620 of the measured airflows through the floor tiles 610, the floor tiles 610 may be provided with representations of airflow values that were predicted by a CFD simulation of the data center 300. The representation of the results of the simulation of airflows may be in the form of colors or patterning applied to the different floor tiles 610.

In the case where the simulated values of temperature and/or humidity and/or airflow don't match the measured values, the user can perform a manual calibration/refinement step of the 3D data center whitespace model. Once the 3D data center whitespace model has been refined, the user can run another CFD simulation and check for agreement with measurement data. Once agreement has been reached, the 3D data center whitespace model is considered "calibrated". In some embodiments agreement between measured and predicted values may be considered reached if the two values differ by less than a threshold, for example, less than 10% or less than 5%. A calibrated 3D model for CFD simulations can be confidently used to predict future configurations such IT population changes, cooler performance, and what-if style scenarios.

In some embodiments, differences between values of parameters such as temperature, humidity, or airflow measured at different locations in a data center may be compared to the values of these parameters predicted by a CFD simulation of the data center. The differences in values may be quantified and visually displayed on the 3D model of the data center. Warning indicators may be provided if the difference between a measured and a simulated parameter value is greater than a defined threshold.

In some embodiments, a computer processing system may send a warning to a user responsive to a difference between a measured temperature and a temperature at the inlet of a respective one of the IT racks predicted from the CFD analysis of the data center being above a threshold.

The computer processing system may automatically adjust an operating parameter of equipment within the data center responsive to a difference between a measured temperature and a temperature at the inlet of a respective one of the IT racks predicted from the CFD analysis of the data center being above a threshold.

The computer processing system to automatically adjust an operating parameter of equipment within the data center responsive to a temperature at the inlet of a respective one of the IT racks predicted from the CFD analysis of the data center being outside of a set range or may automatically adjust an operating parameter of equipment within the data center responsive to a humidity at the inlet of a respective one of the IT racks predicted from the CFD analysis of the data center being outside of a set range.

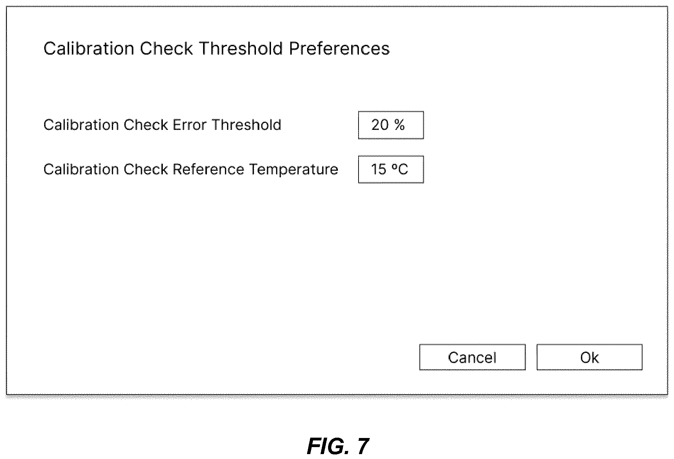

In some embodiments a user may open a user interface in the GUI to set values for a calibration check error threshold and for a calibration check reference temperature. An example of this interface is shown in FIG. 7. Such an interface could be accessed by selecting it from a "Settings" menu in the GUI. The calibration check error threshold is the percentage difference between a measured and simulated parameter (e.g., calculated from abs(Measured - Simulated)/Measured) that may trigger a warning to be displayed in the 3D model. The calibration check reference temperature provides an arbitrary, yet consistent 'zero' point to start with to make meaningful comparisons.

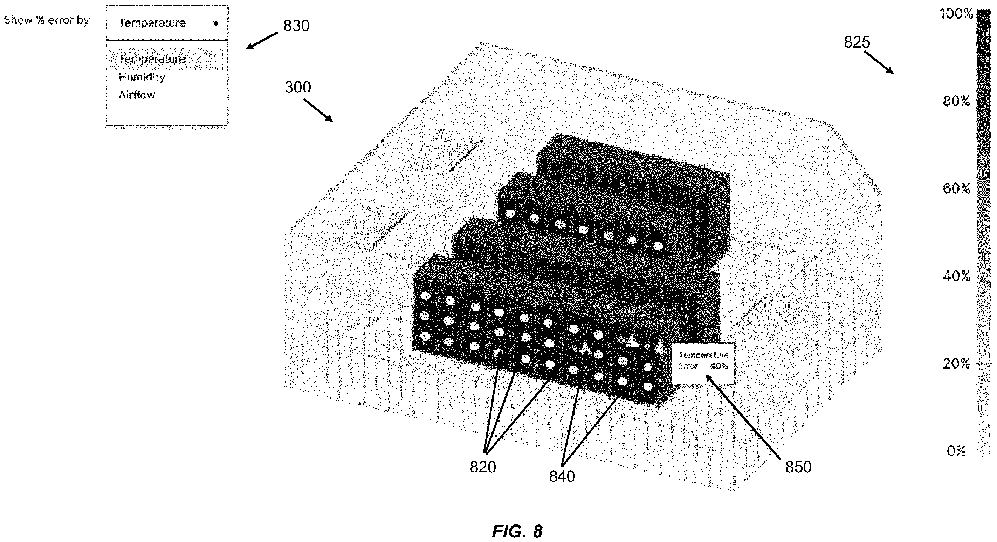

The user may select to view a display of the 3D model of the data center with representations of differences between measured and simulated values of different parameters rather than the measured parameter values themselves as shown in, for example, FIG. 3. FIG. 8 illustrates one example of a display of the 3D model of the data center with representations of differences between measured and simulated values of IT rack inlet temperatures. A menu 830 may be provided to let the user select what parameter (temperature, humidity, or airflow) to show representations of the differences of in the model. A similar menu may be provided in the GUIs shown in any of FIGS. 3-6 to select the parameter whose values (measured and/or simulated) are shown in the visualization of the 3D model.

The representations of the differences are illustrated in FIG. 8 in the form of circles 820 at the points of the temperature measurements. Each of the respective circles 820 may be colored with different colors reflecting the value of the percentage difference between the measured temperature and results of a CFD simulation of the temperature at the location of the respective circle 820. An image of a scale 825 may be provided to indicate what colors correspond to what percentage difference values. The circles 820 may additionally or alternatively be patterned with different line or dot patterns, for example, with pattern density being indicative of different percentage differences between the measured temperatures and results of CFD simulation of the temperatures. The circles 820 in FIG. 8 are shown in greyscale to represent different values of the percentage differences. This is, as discussed above with respect to FIG. 3, due to the requirement that figures in patents be shown in greyscale and it is to be understood that the different greyscale values may be representative of different coloring of the circles 820 that is, in turn, indicative of percentage differences between the measured temperatures and results of CFD simulation of the temperatures. It is also to be understood that although the percentage difference values are shown using representations in the form of circles 820, other shapes, for example, stars, squares, or any other geometric figure may be utilized for the representations of percentage differences between the measured temperatures and results of CFD simulation of the temperatures.

As also shown in FIG. 8 if a percentage differences between a measured IT rack inlet temperature and results of CFD simulation of the temperature is above the calibration check error threshold a warning 840 may be presented in the GUI. The warning 840 may be in the form of an exclamation point or other icon. Hovering a mouse over the warning icon 840 or otherwise selecting the warning icon 840 may cause a numerical value 850 of the percentage difference to be displayed.

In some embodiments, a computer system performing a method as disclosed herein may send a warning to a user responsive to a difference between a measured temperature and a temperature at the inlet of a respective one of the IT racks predicted from the CFD analysis of the data center being above a threshold. The method performed by the computer system may include automatically adjusting an operating parameter of equipment within the data center responsive to a difference between a measured temperature and a temperature at the inlet of a respective one of the IT racks predicted from the CFD analysis of the data center being above a threshold. The method performed by the computer system may include automatically adjusting an operating parameter of equipment within the data center responsive to a temperature at the inlet of a respective one of the IT racks predicted from the CFD analysis of the data center being outside of a set range.

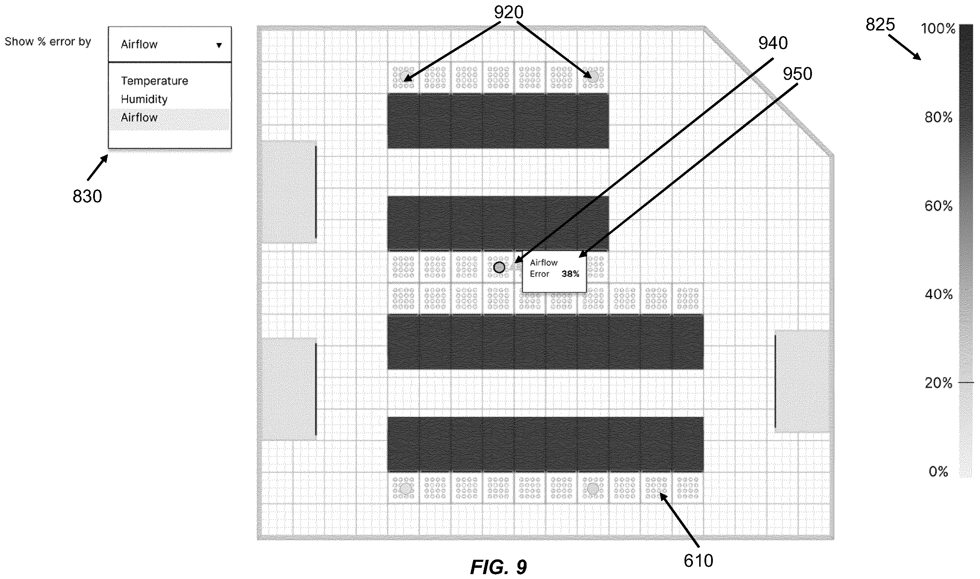

FIG. 9 illustrates a top down view of the data center model in which the user has selected "Airflow" in the menu 830 so that differences between measured airflows through the perforated floor tiles 610 and results of a CFD simulation of airflows through the perforated floor tiles 610 are illustrated. The representations of the differences are illustrated in FIG. 9 in the form of circles 920 at the points of the airflow measurements. Each of the respective circles 920 may be colored with different colors reflecting the value of the percentage difference between the measured airflow and a result of a CFD simulation of the airflow at the location of the respective circle 920. An image of a scale 825 may be provided to indicate what colors correspond to what percentage difference values. The circles 920 may additionally or alternatively be patterned with different line or dot patterns, for example, with pattern density being indicative of different percentage differences between the measured airflows and results of CFD simulation of the airflows. The circles 920 in FIG. 9 are shown in greyscale to represent different values of the percentage differences. This is, as discussed above with respect to FIG. 3, due to the requirement that figures in patents be shown in greyscale and it is to be understood that the different greyscale values may be representative of different coloring of the circles 920 that is, in turn, indicative of percentage differences between the measured airflows and results of CFD simulation of the airflows. It is also to be understood that although the percentage difference values are shown using representations in the form of circles 920, other shapes, for example, stars, squares, or any other geometric figure may be utilized for the representations of percentage differences between the measured airflows and results of CFD simulation of the airflows.

As also shown in FIG. 9 if a percentage differences between a measured floor tile airflow and results of CFD simulation of the floor tile airflow is above the calibration check error threshold a warning 940 may be presented in the GUI. The warning 940 may be in the form of an exclamation point or other icon. Hovering a mouse over the warning icon 940 or otherwise selecting the warning icon 940 may cause a numerical value 950 of the percentage difference to be displayed.

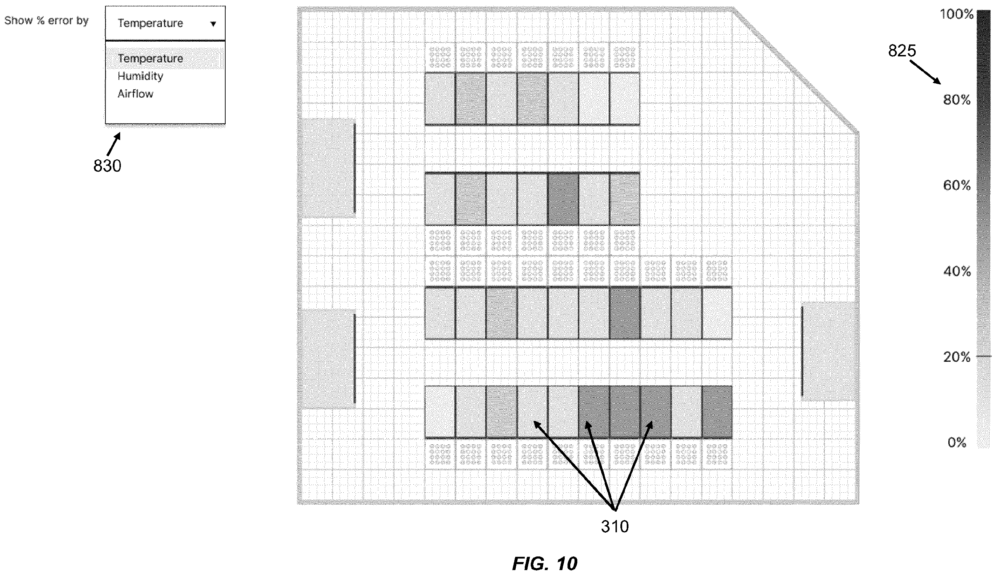

FIG. 10 illustrates a top down view of the data center model in which the user has selected "Temperature" in the menu 830 so that differences between maximum temperatures at the inlets of the IT racks 310 and results of a CFD simulation of the maximum temperatures at the inlets of the IT racks 310 are illustrated. The entire color of a rack 310 reflects the difference between a maximum measured temperature at the inlets of an IT rack 310 and results of a CFD simulation of the maximum temperature at the inlets of the IT rack 310. Coloring the racks in this way provide an "at-a-glance" view that allows a user to quickly pick out racks that deviate from expected values (e.g., hot spots). An image of a scale 825 may be provided to indicate what colors correspond to what percentage difference values. The racks 310 in FIG. 10 are shown in greyscale to represent differences between maximum temperatures at the inlets of the IT racks 310 and results of a CFD simulation of the maximum temperatures at the inlets of the IT racks 310. This is, as discussed above with respect to FIG. 3, due to the requirement that figures in patents be shown in greyscale and it is to be understood that the different greyscale values may be representative of different coloring of the racks 310 that is, in turn, indicative of differences between maximum temperatures at the inlets of the IT racks 310 and results of a CFD simulation of the maximum temperatures at the inlets of the IT racks 310.

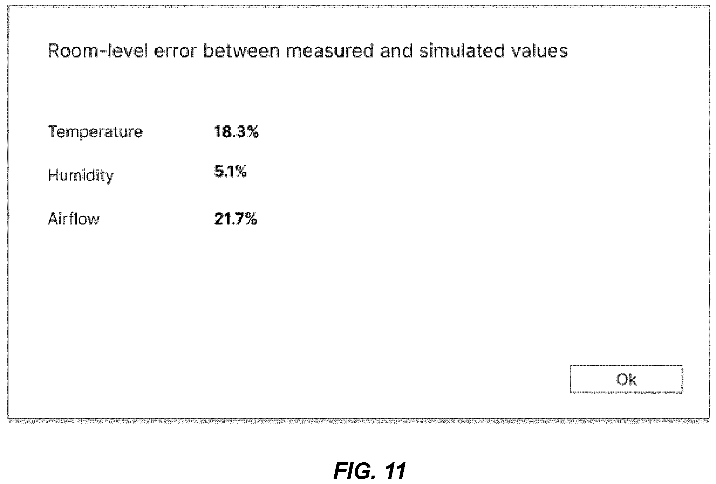

In some embodiments, a user may access a report regarding a global/room-level % errors for all parameters that have both a measured value and a simulated value. This report could be accessed by a button or link provided in the GUI (not shown). FIG. 11 illustrates one example of this report. In the example shown, the report indicates that measured IT rack inlet temperatures differ on average by 18.3% from the results of a CFD simulation of the data center, the average humidity at the IT rack inlets differs on average by 5.1% from the results of the CFD simulation, and the average airflow through the perforated floor tiles differs by 21.7% from the results of the CFD simulation.

In embodiments above, processes and systems are provided that can determine relevant temperatures and air flows in an IT room and within racks in the IT room. The systems and methods can be used to provide optimized design of an IT room by using results of the systems and methods to change the actual layout and/or capacity of equipment or the proposed layout and/or capacity of equipment. In processes described above, values related to IT room cooling, including airflows, pressures, and temperatures may be determined. In at least some embodiments, the values determined are predictions for actual values that will occur in an IT room having the parameters modeled. In methods of at least one embodiment of the invention, after successful modeling of the equipment in an IT room, for example, when values of parameters of interest match measured values of these parameters to within a desired threshold, the results of the model may be used as part of a system to order equipment, ship equipment and install equipment in an IT room as per the designed layout.

In at least some embodiments described above, the design of an IT room and/or actual parameters in an IT room are altered based on predicted temperature and/or airflow. For example, a user of the IT room design and management system may change the location of coolers or the types of coolers that are used in the actual layout of equipment or the proposed layout of equipment in the IT room. These alterations may be implemented to improve the cooling performance and/or may be implemented to provide cost and/or power savings when the performance is found to be within predetermined specifications. Further, based on determined airflow values, a data management system in accordance with one embodiment, may control one or more coolers to adjust the airflow, and in addition, one or more equipment racks can be controlled to reduce power if the airflow is not adequate to provide sufficient cooling.

Based on the outputs of embodiments of the model disclosed herein one or more parameters of cooling and/or similar systems of an IT room may be adjusted, for example, to obtain more desirable airflow and/or temperature distributions within the IT room and/or within individual IT racks or IT equipment in the IT room. Additionally, or alternatively, parameters affecting the inlet temperature of IT equipment in an IT room, for example, computational load assigned to different IT equipment may be adjusted based on the outputs of embodiments of the model disclosed herein to obtain more desirable airflow and/or temperature distributions within the IT room and/or within individual IT racks or IT equipment in the IT room. These adjustments may be performed automatically by a computer system implementing aspects of the model or by a computer system receiving the outputs of the model from another computer system implementing the model. These adjustments may additionally or alternatively be performed manually based on data regarding air temperature, air pressure, or air velocity within the IT room, for example, at one or more faces of more or more IT equipment racks that is displayed to a user in a graphical user interface based on outputs of embodiments of the model disclosed herein. A computer system implementing embodiments of the model disclosed herein may provide outputs of the model for use by control systems and methods as described in U.S. Patent No. 11,582,887, that is incorporated herein by reference in its entirety for all purposes.

Current systems for determining and displaying one or more of predicted air temperature, humidity, or velocity in an IT room including an IT rack typically cannot quickly and accurately determine the predicted airflow velocities and temperatures and generate, based on the output, a display in a graphical user interface of the system illustrating one or more of predicted air temperatures, humidities, or airflow velocities within the IT room along with representations of actual measured values of one or more of these parameters. This is a technical problem. An exemplary embodiment of a system for determining and displaying in a graphical user interface one or more of both predicted and actual measured air temperature, humidity, or velocity in an IT room including an IT rack may comprise a processor instructed to receive a model of an IT room and locations and values of one or more measured parameters within the IT room. The processor may be further instructed to receive an input comprising airflow resistance parameters through the equipment, for example, IT racks, IT equipment airflow parameters, heat-dissipation parameters, and temperatures external to the racks. The heat-dissipation parameter may be associated with the IT equipment airflow parameter, and the IT equipment airflow parameter may be associated with at least one fan providing airflow through the rack. The processor may be instructed to run the input through a CFD analysis that solves for predicted airflows, humidities, and/or temperature within the IT room and equipment based on the input and to provide an output including these predicted parameters in a 3D model of the IT room. The processor may be instructed to generate, based on the output, a display in a graphical user interface illustrating predicted and measured values of one of air temperatures, humidities, or airflow velocities within the IT room. The processor may be instructed to generate, based on the output, a display in a graphical user interface illustrating differences between predicted and measured values of one of air temperatures, humidities, or airflow velocities within the IT room. A user may calibrate the CFD model of the IT room based on the illustrated differences between predicted and measured values of one of air temperatures, humidities, or airflow velocities within the IT room. At least this foregoing combination of features comprises a system for determining and displaying predicted and measured values of one or more of air temperature, pressure, or velocity in an IT room including an IT rack that serves as a technical solution to the foregoing technical problem. This technical solution is not routine and is unconventional. This technical solution is a practical application of a computer-aided-design system that solves the foregoing technical problem and constitutes an improvement in the technical field of software design for IT-room computer-aided-design applications at least by facilitating more accurate display of predicted air temperature, humidity, or velocity in an IT room including an IT rack in which discrete measured values are represented to accurately reflect the measurement location .

In at least some embodiments described above, tools and processes are provided for determining temperatures and airflows in an IT room. In other embodiments, the tools and processes may be used in other types of facilities, and may also be used in mobile applications, including mobile IT rooms. Further, processes and systems in accordance with embodiments described herein may be used in overhead air plenums, and other types of air plenums.

Having thus described several aspects of at least one embodiment of this invention, it is to be appreciated various alterations, modifications, and improvements will readily occur to those skilled in the art. Such alterations, modifications, and improvements are intended to be part of this disclosure and are intended to be within the spirit and scope of the invention. Accordingly, the foregoing description and drawings are by way of example only.

Further examples are provided in the following clauses:
Clause 1. A non-transitory computer readable media having instructions encoded thereon which when executed by a computer processing system cause the computer processing system to perform a method comprising receiving information regarding a layout of racks of information technology equipment (IT racks) within a data center, receiving data regarding measured temperatures at inlets of the IT racks, and displaying representations of the measured temperatures at the inlets of the IT racks in a three dimensional (3D) model of the data center along with temperatures at the inlets of the IT racks predicted from a computational fluid dynamics (CFD) analysis of the data center.
Clause 2. The non-transitory computer readable media of clause 1, wherein receiving the data regarding the measured temperatures at the inlets of the IT racks includes receiving the data from sensors associated with the IT racks.
Clause 3. The non-transitory computer readable media of clause 1, wherein the instructions further cause the computer processing system to receive data regarding measured humidities at the inlets of the IT racks.
Clause 4. The non-transitory computer readable media of clause 3, wherein the instructions further cause the computer processing system to display representations of the measured humidities at the inlets of the IT racks in the 3D model of the data center along with humidities at the inlets of the IT racks predicted from the CFD analysis of the data center.
Clause 5. The non-transitory computer readable media of clause 4, wherein displaying the representations of the measured humidities at the inlets of the IT racks in the 3D model of the data center includes displaying the representations of the measured humidities as colored portions of representations of the IT racks within the 3D model at which measurements of the humidities were taken, the color of the colored portions corresponding to the humidities at the inlets of the IT racks.
Clause 6. The non-transitory computer readable media of clause 3, wherein the instructions further cause the computer processing system to display the representations of the measured humidities at positions on representations of the IT racks within the 3D model at which measurements of the humidities were taken.
Clause 7. The non-transitory computer readable media of clause 3, wherein the instructions further cause the computer processing system to automatically adjust an operating parameter of equipment within the data center responsive to a humidity at the inlet of a respective one of the IT racks predicted from the CFD analysis of the data center being outside of a set range.
Clause 8. The non-transitory computer readable media of clause 3, wherein the instructions further cause the computer processing system to display a top-down view of the model of the data center with indications of maximum measured humidities at the inlets of the IT racks superimposed on displayed representations of the IT racks.
Clause 9. The non-transitory computer readable media of clause 3, wherein the instructions further cause the computer processing system to display a top-down view of the model of the data center with indications of average measured humidities at the inlets of the IT racks superimposed on displayed representations of the IT racks.
Clause 10. The non-transitory computer readable media of clause 3, wherein the instructions further cause the computer processing system to display a top-down view of the model of the data center with indications of minimum measured humidities at the inlets of the IT racks superimposed on displayed representations of the IT racks.
Clause 11. The non-transitory computer readable media of clause 1, wherein the instructions further cause the computer processing system to receive instructions from a user regarding a plane within the 3D model to display the humidities at the inlets of the IT racks predicted by the CFD analysis of the data center and to display the predicted humidities at the inlets of the IT racks in the plane within the 3D model.
Clause 12. The non-transitory computer readable media of clause 1, wherein the instructions further cause the computer processing system to display humidities at the inlets of the IT racks predicted from the CFD analysis of the data center as spatially varying temperatures across the 3D model.
Clause 13. The non-transitory computer readable media of clause 1, wherein the instructions further cause the computer processing system to display numerical comparisons between measured humidities at the inlets of the IT racks and the humidities at the inlets of the IT racks predicted from the CFD analysis of the data center.
Clause 14. The non-transitory computer readable media of clause 1, wherein the instructions further cause the computer processing system to display metrics indicative of a degree of agreement between measured humidities at the inlets of the IT racks and the humidities at the inlets of the IT racks predicted from the CFD analysis of the data center.
Clause 15. The non-transitory computer readable media of clause 1, wherein the instructions further cause the computer processing system to display an indication when a difference between a measured humidity and a humidity at the inlet of a respective one of the IT racks predicted from the CFD analysis of the data center is above a threshold.
Clause 16. The non-transitory computer readable media of clause 1, wherein the instructions further cause the computer processing system to send a warning to a user responsive to a difference between a measured humidity and a humidity at the inlet of a respective one of the IT racks predicted from the CFD analysis of the data center being above a threshold.
Clause 17. The non-transitory computer readable media of clause 1, wherein the instructions further cause the computer processing system to automatically adjust an operating parameter of equipment within the data center responsive to a difference between a measured humidity and a humidity at the inlet of a respective one of the IT racks predicted from the CFD analysis of the data center being above a threshold.
Clause 18. The non-transitory computer readable media of clause 1, wherein the instructions further cause the computer processing system to automatically adjust an operating parameter of equipment within the data center responsive to a humidity at the inlet of a respective one of the IT racks predicted from the CFD analysis of the data center being outside of a set range.
Clause 19. The non-transitory computer readable media of clause 1, wherein the instructions further cause the computer processing system to display measured humidities at the inlets of the IT racks using a first display method and to display humidities at the inlets of the IT racks predicted from the CFD analysis using a second display method.
Clause 20. The non-transitory computer readable media of clause 1, wherein the instructions further cause the computer processing system to display measured humidities at the inlets of the IT racks as geometric shapes representing discreet values and to display measured humidities at the inlets of the IT racks predicted from the CFD analysis using a continuously variable representation.
Clause 21. The non-transitory computer readable media of clause 1, wherein displaying the representations of the measured temperatures at the inlets of the IT racks includes displaying the representations of the measured temperatures at positions on representations of the IT racks within the 3D model at which measurements of the temperatures were taken.
Clause 22. The non-transitory computer readable media of clause 1, wherein displaying the representations of the temperatures at the inlets of the IT racks includes displaying the representations of the temperatures as colored portions of representations of the IT racks within the 3D model at which measurements of the temperatures were taken, the color of the colored portions corresponding to the temperatures at the inlets of the IT racks.
Clause 23. The non-transitory computer readable media of clause 1, wherein the instructions further cause the computer processing system to display a top-down view of the model of the data center with indications of maximum measured temperatures at the inlets of the IT racks superimposed on displayed representations of the IT racks.
Clause 24. The non-transitory computer readable media of clause 1, wherein the instructions further cause the computer processing system to display a top-down view of the model of the data center with indications of average measured temperatures at the inlets of the IT racks superimposed on displayed representations of the IT racks.
Clause 25. The non-transitory computer readable media of clause 1, wherein the instructions further cause the computer processing system to display a top-down view of the model of the data center with indications of minimum measured temperatures at the inlets of the IT racks superimposed on displayed representations of the IT racks.
Clause 26. The non-transitory computer readable media of clause 1, wherein the instructions further cause the computer processing system to display the indications of maximum measured temperatures at the inlets of the IT racks as coloring of the IT racks, the coloring of the IT racks corresponding to the maximum measured temperatures at the inlets of the IT racks.
Clause 27. The non-transitory computer readable media of clause 1, wherein the instructions further cause the computer processing system to perform the CFD analysis of the data center.
Clause 28. The non-transitory computer readable media of clause 1, wherein the instructions further cause the computer processing system to receive instructions from a user regarding a plane within the 3D model to display the predicted temperatures at the inlets of the IT racks and to display the predicted temperatures at the inlets of the IT racks in the plane within the 3D model.
Clause 29. The non-transitory computer readable media of clause 1, wherein the instructions further cause the computer processing system to display the temperatures at the inlets of the IT racks predicted from the CFD analysis of the data center as spatially varying temperatures across the 3D model.
Clause 30. The non-transitory computer readable media of clause 1, wherein the instructions further cause the computer processing system to display numerical comparisons between the measured temperatures at the inlets of the IT racks and the temperatures at the inlets of the IT racks predicted from the CFD analysis of the data center.
Clause 31. The non-transitory computer readable media of clause 1, wherein the instructions further cause the computer processing system to display metrics indicative of a degree of agreement between the measured temperatures at the inlets of the IT racks and the temperatures at the inlets of the IT racks predicted from the CFD analysis of the data center.
Clause 32. The non-transitory computer readable media of clause 1, wherein the instructions further cause the computer processing system to display an indication when a difference between a measured temperature and a temperature at the inlet of a respective one of the IT racks predicted from the CFD analysis of the data center is above a threshold.
Clause 33. The non-transitory computer readable media of clause 1, wherein the instructions further cause the computer processing system to send a warning to a user responsive to a difference between a measured temperature and a temperature at the inlet of a respective one of the IT racks predicted from the CFD analysis of the data center being above a threshold.
Clause 34. The non-transitory computer readable media of clause 1, wherein the instructions further cause the computer processing system to automatically adjust an operating parameter of equipment within the data center responsive to a difference between a measured temperature and a temperature at the inlet of a respective one of the IT racks predicted from the CFD analysis of the data center being above a threshold.
Clause 35. The non-transitory computer readable media of clause 1, wherein the instructions further cause the computer processing system to automatically adjust an operating parameter of equipment within the data center responsive to a temperature at the inlet of a respective one of the IT racks predicted from the CFD analysis of the data center being outside of a set range.
Clause 36. The non-transitory computer readable media of clause 1, wherein the instructions further cause the computer processing system to display the measured temperatures using a first display method and to display the temperatures predicted from the CFD analysis using a second display method.
Clause 37. The non-transitory computer readable media of clause 1, wherein the instructions further cause the computer processing system to display the measured temperatures as geometric shapes representing discreet values and to display the temperatures predicted from the CFD analysis using a continuously variable representation.
Clause 38. A computer processing system configured to perform a method comprising receiving information regarding a layout of racks of information technology equipment (IT racks) within a data center, receiving data regarding measured temperatures at inlets of the IT racks, and displaying representations of the measured temperatures at the inlets of the IT racks in a three dimensional (3D) model of the data center along with temperatures at the inlets of the IT racks predicted from a computation fluid dynamics (CFD) analysis of the data center.
Clause 39. The computer processing system of clause 38, wherein the method further comprises receiving the data regarding the measured temperatures at the inlets of the IT racks from sensors associated with the IT racks.
Clause 40. The computer processing system of clause 38, wherein the method further comprises receiving data regarding measured humidities at the inlets of the IT racks.
Clause 41. The computer processing system of clause 40, wherein the method further comprises displaying representations of the measured humidities at the inlets of the IT racks in the 3D model of the data center along with humidities at the inlets of the IT racks predicted from the CFD analysis of the data center.
Clause 42. The method of clause 41, wherein displaying the representations of the measured humidities at the inlets of the IT racks in the 3D model of the data center includes displaying the representations of the measured humidities as colored portions of representations of the IT racks within the 3D model at which measurements of the humidities were taken, the color of the colored portions corresponding to the humidities at the inlets of the IT racks.
Clause 43. The computer processing system of clause 40, wherein the method further comprises displaying the representations of the measured humidities at positions on representations of the IT racks within the 3D model at which measurements of the humidities were taken.
Clause 44. The computer processing system of clause 40, wherein the method further comprises automatically adjusting an operating parameter of equipment within the data center responsive to a humidity at the inlet of a respective one of the IT racks predicted from the CFD analysis of the data center being outside of a set range.
Clause 45. The computer processing system of clause 40, wherein the method further comprises displaying a top-down view of the model of the data center with indications of maximum measured humidities at the inlets of the IT racks superimposed on displayed representations of the IT racks.
Clause 46. The computer processing system of clause 40, wherein the method further comprises displaying a top-down view of the model of the data center with indications of average measured humidities at the inlets of the IT racks superimposed on displayed representations of the IT racks.
Clause 47. The computer processing system of clause 40, wherein the method further comprises displaying a top-down view of the model of the data center with indications of minimum measured humidities at the inlets of the IT racks superimposed on displayed representations of the IT racks.
Clause 48. The computer processing system of clause 38, wherein the method further comprises receiving instructions from a user regarding a plane within the 3D model to display the humidities at the inlets of the IT racks predicted by the CFD analysis of the data center and to display the predicted humidities at the inlets of the IT racks in the plane within the 3D model.
Clause 49. The computer processing system of clause 38, wherein the method further comprises displaying humidities at the inlets of the IT racks predicted from the CFD analysis of the data center as spatially varying temperatures across the 3D model.
Clause 50. The computer processing system of clause 38, wherein the method further comprises displaying numerical comparisons between measured humidities at the inlets of the IT racks and the humidities at the inlets of the IT racks predicted from the CFD analysis of the data center.
Clause 51. The computer processing system of clause 38, wherein the method further comprises displaying metrics indicative of a degree of agreement between measured humidities at the inlets of the IT racks and the humidities at the inlets of the IT racks predicted from the CFD analysis of the data center.
Clause 52. The computer processing system of clause 38, wherein the method further comprises displaying an indication when a difference between a measured humidity and a humidity at the inlet of a respective one of the IT racks predicted from the CFD analysis of the data center is above a threshold.
Clause 53. The computer processing system of clause 38, wherein the method further comprises sending a warning to a user responsive to a difference between a measured humidity and a humidity at the inlet of a respective one of the IT racks predicted from the CFD analysis of the data center being above a threshold.
Clause 54. The computer processing system of clause 38, wherein the method further comprises causing the computer processing system to automatically adjust an operating parameter of equipment within the data center responsive to a difference between a measured humidity and a humidity at the inlet of a respective one of the IT racks predicted from the CFD analysis of the data center being above a threshold.
Clause 55. The computer processing system of clause 38, wherein the method further comprises causing the computer processing system to automatically adjust an operating parameter of equipment within the data center responsive to a humidity at the inlet of a respective one of the IT racks predicted from the CFD analysis of the data center being outside of a set range.
Clause 56. The computer processing system of clause 38, wherein the method further comprises causing the computer processing system to display measured humidities at the inlets of the IT racks using a first display method and to display humidities at the inlets of the IT racks predicted from the CFD analysis using a second display method.
Clause 57. The computer processing system of clause 38, wherein the method further comprises causing the computer processing system to display measured humidities at the inlets of the IT racks as geometric shapes representing discreet values and to display measured humidities at the inlets of the IT racks predicted from the CFD analysis using a continuously variable representation.
Clause 58. The computer processing system of clause 38, wherein the method further comprises displaying the representations of the measured temperatures at the inlets of the IT racks at positions on representations of the IT racks within the 3D model at which measurements of the temperatures were taken.
Clause 59. The computer processing system of clause 38, wherein the method further comprises displaying the representations of the temperatures at the inlets of the IT racks as colored portions of representations of the IT racks within the 3D model at which measurements of the temperatures were taken, the color of the colored portions corresponding to the temperatures at the inlets of the IT racks.
Clause 60. The computer processing system of clause 38, wherein the method further comprises displaying a top-down view of the model of the data center with indications of maximum measured temperatures at the inlets of the IT racks superimposed on displayed representations of the IT racks.
Clause 61. The computer processing system of clause 60, wherein the method further comprises displaying the indications of maximum measured temperatures at the inlets of the IT racks as coloring of the IT racks, the coloring of the IT racks corresponding to the maximum measured temperatures at the inlets of the IT racks.
Clause 62. The computer processing system of clause 38, wherein the method further comprises performing the CFD analysis of the data center on the computer processing system.
Clause 63. The computer processing system of clause 38, wherein the method further comprises receiving instructions from a user regarding a plane within the 3D model to display the predicted temperatures at the inlets of the IT racks and displaying the predicted temperatures at the inlets of the IT racks in the plane within the 3D model.
Clause 64. The computer processing system of clause 38, wherein the method further comprises displaying the temperatures at the inlets of the IT racks predicted from the CFD analysis of the data center as continuously varying temperatures across the 3D model.
Clause 65. The computer processing system of clause 38, wherein the method further comprises displaying numerical comparisons between the measured temperatures at the inlets of the IT racks and the temperatures at the inlets of the IT racks predicted from the CFD analysis of the data center.
Clause 66. The computer processing system of clause 38, wherein the method further comprises displaying metrics indicative of a degree of agreement between the measured temperatures at the inlets of the IT racks and the temperatures at the inlets of the IT racks predicted from the CFD analysis of the data center.
Clause 67. The computer processing system of clause 38, wherein the method further comprises displaying a warning indicator responsive to a difference between a measured temperature and a temperature at the inlet of a respective one of the IT racks predicted from the CFD analysis of the data center being above a threshold.
Clause 68. The computer processing system of clause 38, wherein the method further comprises sending a warning to a user responsive to a difference between a measured temperature and a temperature at the inlet of a respective one of the IT racks predicted from the CFD analysis of the data center being above a threshold.
Clause 69. The computer processing system of clause 38, wherein the method further comprises automatically adjusting an operating parameter of equipment within the data center responsive to a difference between a measured temperature and a temperature at the inlet of a respective one of the IT racks predicted from the CFD analysis of the data center being above a threshold.
Clause 70. The computer processing system of clause 38, wherein the method further comprises automatically adjusting an operating parameter of equipment within the data center responsive to a temperature at the inlet of a respective one of the IT racks predicted from the CFD analysis of the data center being outside of a set range.
Clause 71. The computer processing system of clause 38, wherein the method further comprises displaying the measured temperatures using a first display method and displaying the temperatures predicted from the CFD analysis using a second display method.
Clause 72. The computer processing system of clause 38, wherein the method further comprises displaying the measured temperatures as geometric shapes representing discreet values and displaying the temperatures predicted from the CFD analysis using a continuously variable representation.
Clause 73. A method performed on a computer processing system, the method comprising receiving information regarding a layout of racks of information technology equipment (IT racks) within a data center, receiving data regarding measured temperatures at inlets of the IT racks, and displaying representations of the measured temperatures at the inlets of the IT racks in a three dimensional (3D) model of the data center along with temperatures at the inlets of the IT racks predicted from a computation fluid dynamics (CFD) analysis of the data center.

## Claims

1. A method for designing a cooling system for equipment racks comprising:
receiving information regarding a layout of IT racks of information technology equipment within a data center;
receiving data regarding measured temperatures at inlets of the IT racks;
displaying representations of the measured temperatures at the inlets of the IT racks in a three dimensional model of the data center, along with temperatures at the inlets of the IT racks predicted from a computation fluid dynamics analysis of the data center; and
arranging or locating a cooling system for the IT racks and/or adjusting operating parameters of the cooling system to obtain a desired temperature of the information technology equipment, by comparing the measured temperatures and the predicted temperatures to identify discrepancies between such temperatures and by calibrating a CFD model of the data center used to perform the computation fluid dynamics analysis to reduce the magnitude of these discrepancies.

2. The method of claim 1, wherein receiving the data regarding the measured temperatures at the inlets of the IT racks includes receiving the data from sensors associated with the IT racks.

3. The method of claims 1 or 2, further comprising receiving data regarding measured humidities at the inlets of the IT racks and displaying representations of the measured humidities at the inlets of the IT racks in the three dimensional model of the data center, along with humidities at the inlets of the IT racks predicted from the computation fluid dynamics analysis of the data center, and automatically adjusting an operating parameter of the information technology equipment within the data center responsive to the humidity at the inlet of a respective one of the IT racks predicted from the computation fluid dynamics analysis of the data center being outside of a set range.

4. The method of claim 3, further comprising displaying the humidities at the inlets of the IT racks predicted from the CFD analysis of the data center as spatially varying temperatures across the 3D model.

5. The method of claims 3 or 4, further comprising calculating a difference between the measured humidity and the humidity at the inlet of a respective one of the IT racks predicted from the computation fluid dynamics analysis of the data center and sending a warning to a user responsive to said difference being above a threshold.

6. The method of claims 3 or 4, further comprising calculating a difference between the measured humidity and the humidity at the inlet of a respective one of the IT racks predicted from the computation fluid dynamics analysis of the data center and automatically adjusting an operating parameter of the information technology equipment within the data center responsive to said difference being above a threshold.

7. The method of any of claims 3 to 6, further comprising automatically adjusting an operating parameter of the information technology equipment within the data center responsive to the humidity at the inlet of a respective one of the IT racks predicted from the computation fluid dynamics analysis of the data center being outside of a set range.

8. The method of any of the above claims, further comprising displaying the indications of maximum measured temperatures at the inlets of the IT racks as coloring of the IT racks, the coloring of the IT racks corresponding to the maximum measured temperatures at the inlets of the IT racks.

9. The method of any of the above claims, further comprising displaying the temperatures at the inlets of the IT racks predicted from the computation fluid dynamics analysis of the data center as spatially varying temperatures across the three dimensional model.

10. The method of any of the above claims, further comprising calculating a difference between the measured temperature and a temperature at the inlet of a respective one of the IT racks predicted from the computation fluid dynamics analysis of the data center and sending a warning to a user responsive to said difference being above a threshold.

11. The method of any of the above claims, further comprising calculating a difference between the measured temperature and the temperature at the inlet of a respective one of the IT racks predicted from the computation fluid dynamics analysis of the data center and automatically adjusting an operating parameter of the information technology equipment within the data center responsive to said difference being above a threshold.

12. The method of any of the above claims, further comprising automatically adjusting an operating parameter of the information technology equipment within the data center responsive to the temperature at the inlet of a respective one of the IT racks predicted from the computation fluid dynamics analysis of the data center being outside of a set range.

13. A computer processing system comprising means for carrying out a method according to any of the claims 1 to 12.

14. A non-transitory computer readable media comprising instructions which, when executed by a computer, cause the computer to carry out the method of any of the claims 1 to 12.

15. A computer program product comprising instructions which, when the program is executed by a computer, cause the computer to carry out the method of any of the claims 1 to 12.
